# EUROPÄISCHE PATENTSCHRIFT

(11) **EP 2 820 980 B1**
(45) Veröffentlichungstag und Bekanntmachung des Hinweises auf die Patenterteilung: **21.10.2015**
(21) Anmeldenummer: 14181915.1
(22) Anmeldetag: 20.07.2012
(51) Int. Cl.: A47J 27/08, A47J 27/092

(54) **Niederdruckkochtopf**
Low-pressure cooking pot
Autocuiseur basse pression

(30) Priorität: 21.07.2011 DE 102011079597
(43) Veröffentlichungstag der Anmeldung: 07.01.2015
(62) Teilanmeldung aus: 12738112.7
(73) Patentinhaber: Gero Vertriebs-GmbH, 42329 Wuppertal (DE)
(72) Erfinder: de Bastos Reis Portugal, Mario, 4520-249 SANTA MARIA DA FEIRA (PT)
(74) Vertreter: Lippert, Stachow & Partner

(56) Entgegenhaltungen:
- EP-A1- 0 491 324
- EP-A1- 1 029 483
- WO-A1-2005/074767
- DE-U1-202010 012 194
- US-B1- 6 513 420

## Beschreibung

Die Erfindung betrifft einen Niederdruckkochtopf, bestehend aus einem mit einem bestimmten Fassungsvermögen versehenen runden oder ovalen Topf, der um seine obere Öffnung herum einen nach außen gebogenen Schüttrand aufweist, einem auf die obere Öffnung passenden Deckel mit einem Dichtring aus elastischem Material, einem an dem Deckel vorgesehenen Verschlussmechanismus, der mit beweglichen Klauen zum Hintergreifen des Schüttrandes ausgestattet ist, einem an dem Deckel vorgesehen Handgriff, einem an dem Handgriff angeordneten Betätigungselement zum Lösen und Verriegeln der Klauen und einem in dem Deckel vorgesehenen Überdruckventil sowie einem Sicherheitsventil.

Bei einem bekannten Schnellkochtopf der bekannten Art (DE 20 2010 012 194 U1) ist neben einem Überdruckventil auch ein Sicherheitsventil vorgesehen. Bei dem bekannten Schnellkochtopf ist das Sicherheitsventil mit einem vertikal verschiebbaren Stift versehen, der in seiner nach oben verschobenen Position erkennbar macht, dass der Topf unter Druck steht und somit nicht geöffnet werden darf. Gleichzeitig verhindert das Oberteil des Sicherheitsventils, dass der Griff zum Öffnen des Topfes gedreht werden kann, solange der Innenraum des Topfes unter Druck steht. Die Bedienungsperson muss also zunächst einmal durch Niederdrücken des Stiftes den Druck aus dem Schnellkochtopf ablassen, damit das Oberteil des Sicherheitsventils den Griff freigibt und der Deckel anschließend geöffnet werden kann.

Ein solcher bekannter Drucktopf ist also im Hinblick auf seinen zusätzlichen mechanischen Sperrmechanismus relativ aufwendig und verlangt von der Bedienungsperson einen zusätzlichen Arbeitsgang zum Entlüften des Drucktopfes.

Ausgehend von diesem Stand der Technik liegt der Erfindung die Aufgabe zugrunde, einen Niederdruckkochtopf zu schaffen, der einfacher im Aufbau und mit geringerem Aufwand zu bedienen ist.

Erfindungsgemäß wird diese Aufgabe dadurch gelöst, dass das Sicherheitsventil im Bereich von mindestens einer der Klauen angeordnet ist und dass beim Bewegen der Klauen in die Entriegelungsstellung das Sicherheitsventil geöffnet wird, sodass bereits während des Entriegelungsvorgangs der innere Dampfdruck nach außen entweichen kann.

Der erfindungsgemäße Niederdruckkochtopf ist somit sehr leicht zu bedienen, denn beim Einleiten des Öffnungsvorgangs wird durch die Bewegung der jeweiligen Klaue das Sicherheitsventil geöffnet, sodass bereits während des Entriegelungsvorgangs der innere Dampfdruck nach außen entweichen kann. Das Sicherheitsventil wird also unmittelbar durch die Einleitung des Entriegelungsvorgangs geöffnet, sodass der Druck bereits entwichen ist, wenn die Klauen den Deckel freigeben.

Das Sicherheitsventil weist zweckmäßig eine Durchlassöffnung durch den Deckel auf, die in der Betriebsstellung des Kochtopfes mit einem lose auf dieser aufliegenden Verschlusskörper abgedeckt ist. Die Dichtung wird dabei in erster Linie durch das Gewicht des auf der Durchlassöffnung aufliegenden Verschlusskörpers erzeugt. Der Verschlusskörper ist dabei von einer Abdeckhaube mit Spiel umgeben, die Teil einer der beweglichen Klauen ist, sodass der Verschlusskörper in der nach außen verschobenen, entriegelten Klauenstellung die Durchlassöffnung durch den Deckel freigibt. Wenn also der Deckel abgenommen und dazu die Klauen nach außen verschoben werden, kann automatisch der Restdruck, der sich noch im Innern des Topfes befindet, nach außen entweichen.

Vorzugsweise ist die Durchlassöffnung in der Oberseite eines Bauteils angeordnet, welches dicht in dem Deckel verankert ist.

Das Bauteil kann dabei in seiner Mitte einen Hohlraum umschließen, in welchen von unten her kleine Durchgangskanäle münden, sodass der Innenraum des Topfes über diese Durchgangskanäle mit dem Hohlraum sowie über die Durchlassöffnung mit der äußeren Umgebung verbindbar ist.

Die Durchlassöffnung des Sicherheitsventils ist zweckmäßig kreisrund ausgebildet, während der Verschlusskörper eine leicht herstellbare Kugel sein kann.

Andere Kombinationen und Formen der Durchlassöffnung und des Verschlusskörpers sind ebenfalls möglich.

Die Erfindung ist in der Zeichnung beispielhaft veranschaulicht und im Nachstehenden im Einzelnen anhand der Zeichnung beschrieben. Es zeigen:
- Fig. 1:: eine Seitenansicht des erfindungsgemäßen Niederdruckkochtopfes
- Fig. 2:: einen Schnitt durch den an dem Deckel vorgesehenen Dichtring,

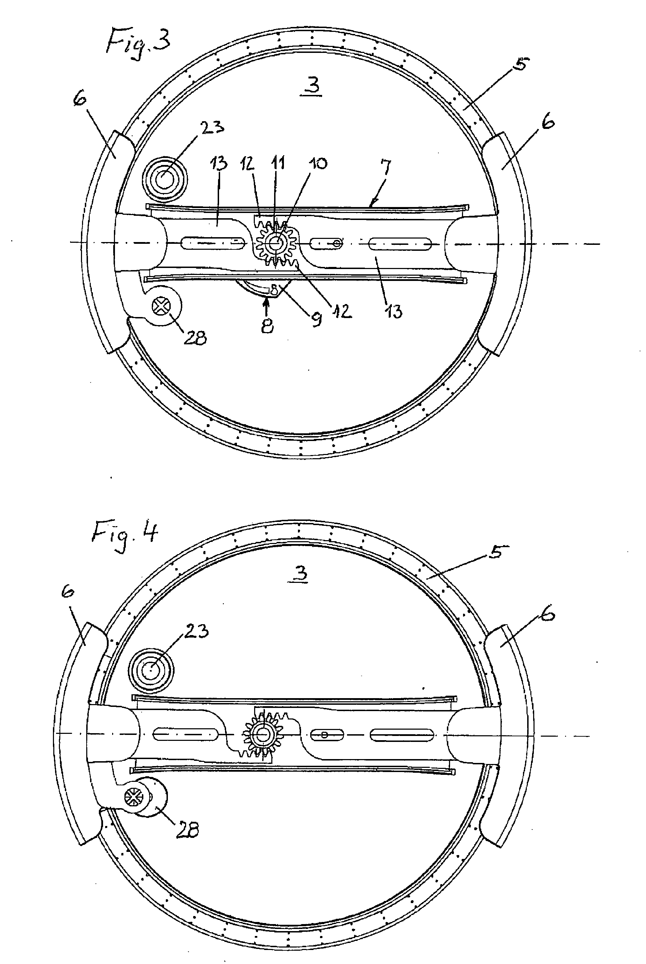

- Fig. 3:: eine Draufsicht auf den Deckel, wobei die verriegelte Stellung des Verschlussmechanismus dargestellt ist,
- Fig. 4:: die gleiche Draufsicht wie Fig. 3, wobei jedoch der Verschlussmechanismus in geöffneter Stellung dargestellt ist,
- Fig. 5:: das Überdruckventil in geschlossener Stellung,
- Fig. 6:: das Überdruckventil in geöffneter Stellung,
- Fig. 7:: das Sicherheitsventil in geschlossener Stellung und
- Fig. 8:: das Sicherheitsventil in geöffneter Stellung.

Nach der Zeichnung besteht das dort dargestellte Ausführungsbeispiel des Niederdruckkochtopfs aus einem runden Topf 1, der mit zwei seitlichen Handgriffen 2 versehen ist, sowie einem auf die obere Öffnung des Topfs 1 passenden Deckel 3.

An dem Topf ist rund um seine obere Öffnung herum ein nach außen gebogener Schüttrand 4 vorgesehen.

Der Deckel 3 ist mit einem Dichtring 5 ausgestattet, der aus elastischem Material gefertigt ist. Der Deckel 3 weist weiterhin einen Verschlussmechanismus auf, der mit zwei beweglichen Klauen 6 zum Hintergreifen des Schüttrandes 4 ausgestattet ist.

Ferner ist an dem Deckel 3 ein Handgriff 7 vorgesehen, an welchem ein Betätigungselement 8 zum radialen Verschieben der Klauen 6 angeordnet ist. Das Betätigungselement 8 ist als kleiner, mit dem Daumen zu betätigender Hebel 9 ausgebildet, der unter dem Handgriff 7 des Deckels 3 angeordnet ist und eine Welle 10 antreibt, die in vertikaler Lage in dem bogenförmigen Handgriff 7 des Deckels 3 gelagert ist. Auf der Welle 10 sitzt ein Ritzel 11, welches auf gegenüberliegenden Seiten mit Zahnstangen 12 im Eingriff steht. Die Zahnstangen 12 sind Teile von Schubstangen 13, die starr mit den Klauen 6 verbunden sind und bei Rotation des Ritzels 11 vor- oder zurückbewegt werden. Bei Rotation des Ritzels 11 im Uhrzeigersinn werden die Zahnstangen 12 mit den Schubstangen 13 radial nach außen geschoben, sodass die Klauen 6 zum Öffnen des Deckels 3 die entriegelte Stellung einnehmen. Bei Rotation des Ritzels 11 in entgegengesetzter Richtung werden die Klauen 6 radial nach innen gezogen und verriegeln den Deckel 3 fest auf dem Schüttrand 4 des Topfes 1.

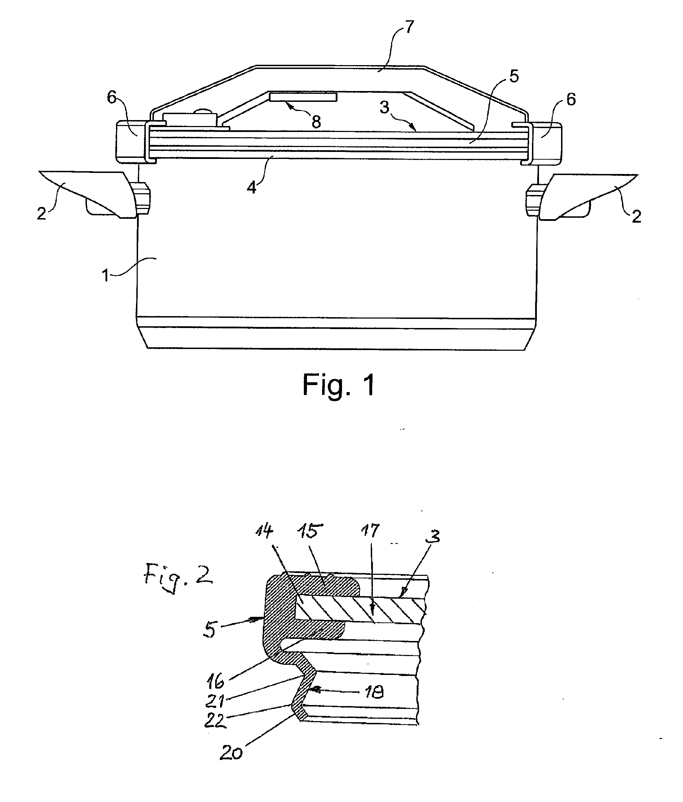

Wie insbesondere aus den Figuren 2 sowie 7 und 8 zu entnehmen ist, umgibt der Dichtring 5 den äußeren Umfang des Deckelrandes 14. Der Dichtring 5 weist zu diesem Zweck in seinem oberen Bereich einen oberen Flansch 15 und einen, im Abstand von diesem angeordnet, unteren Flansch 16 auf.

Der Deckel 3 besteht aus einer ebenflächigen Scheibe 17, die aus Glas oder durchsichtigem Kunststoff besteht, aber auch aus Metall gefertigt sein kann.

Die beiden Flansche 15 und 16 übergreifen die Ober- und Unterseite der Scheibe 17 und schließen diese dicht zwischen sich ein.

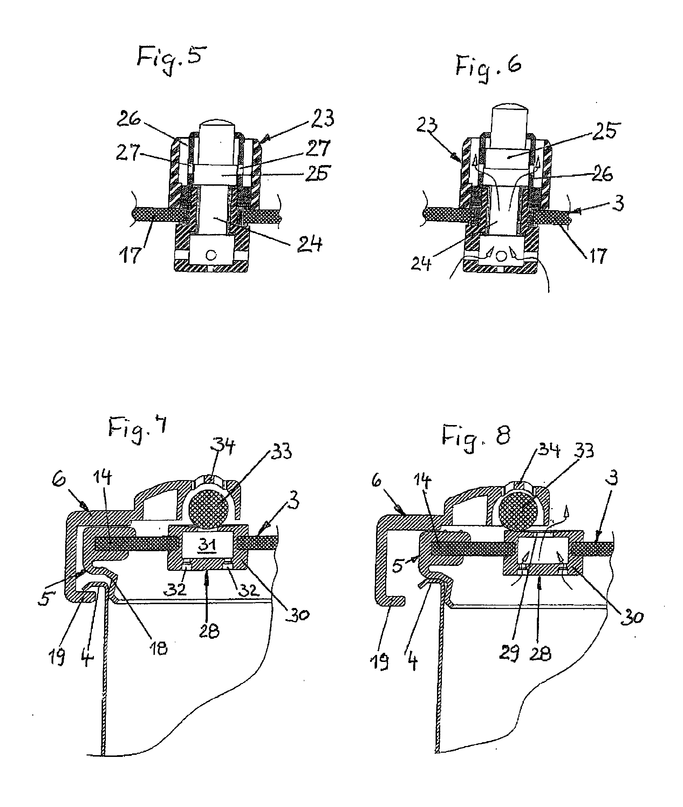

Ferner weist der Dichtring 5 eine Dichtlippe 18 auf, die vom Außenrand des Dichtrings 5 ausgeht und sich in Richtung zum Topf 1 hin erstreckt. Bei aufgesetztem Deckel 3 liegt die Dichtlippe 18 unter Spannung an der Innenseite des Topfes 1 an, wie insbesondere aus den Figuren 7 und 8 zu erkennen ist.

Die Dichtlippe 18 erstreckt sich so weit nach unten, dass sie noch an der Innenseite des Topfes 1 anliegt, wenn der Deckel 3 in der Betriebsstellung leicht angehoben ist, wie in Fig. 7 dargestellt. In dieser Stellung liegen die Klauen 6 mit ihren an ihren Unterseiten ausgebildeten Verriegelungsschenkeln 19 an der Unterseite des Schüttrandes 4 an, wodurch die Betriebsstellung des Deckels 3 auf dem Topf 1 definiert ist.

An ihrem unteren Ende weist die Dichtlippe 18 einen schräg nach innen gebogenen umlaufenden Bereich 20 auf, dessen Außendurchmesser kleiner als der Innendurchmesser des Topfes 1 ist. Dadurch ist gewährleistet, dass beim Aufsetzen des Deckels 3 auf den Topf 1 die Dichtlippe 18 in das Topfinnere geführt wird und sich dann unter geringer Verformung an die Innenseite des Topfes 1 anlegt.

Oberhalb des schräg nach innen gerichteten Bereichs 20 der Dichtlippe 18 weist diese eine Einschnürung 21 auf. Dadurch entsteht zwischen der Einschnürung 21 und dem schräg nach innen gerichteten Bereich 20 der Dichtlippe 18 ein umlaufender Vorsprung 22, der als einziger Abschnitt der Dichtlippe 18 an der Innenfläche des Topfes 1 anliegt und dadurch eine gute Dichtwirkung erzielt.

In dem Deckel 3 ist nahe seinem Außenrand ein übliches Überdruckventil 23 vorgesehen, welches für die Einstellung eines Überdrucks sorgt. Das Überdruckventil 23 ist als Gewichtsventil ausgebildet. Dieses besteht im Wesentlichen aus einer sich dicht durch den Deckel 3 erstreckenden Hülse 24 sowie einem Gewicht 25, welches in vertikaler Richtung in einer sich an die Hülse 24 anschließenden rohrförmigen Führung 26 gleiten kann. Wenn sich im Innern des Topfes 1 noch kein Druck aufgebaut hat bzw. der Druck noch sehr gering ist, liegt das Gewicht 25 auf der offenen Oberseite der Hülse 24 auf und verschließt das Innere des Topfes 1. Wenn der Druck dann einen kritischen Pegel einnimmt, hebt sich das Gewicht 25 allmählich an, bis der Dampfdruck durch seitliche Öffnungen 27 in der rohrförmigen Führung 26 entweichen kann, wie in Fig. 6 dargestellt.

Zusätzlich zu diesen beschriebenen Überdruckventil 23 ist an dem Deckel 3 ein Sicherheitsventil 28 vorgesehen, welches insbesondere in den Figuren 7 und 8 im Detail dargestellt ist. Das Sicherheitsventil 28 ist in dem Deckel 3 im Bereich einer Klaue 6 angeordnet.

Das Sicherheitsventil 28 besteht im Wesentlichen aus einer sich durch den Deckel 3 hindurch erstreckenden Durchlassöffnung 29. Die Durchlassöffnung 29 ist in der Oberseite eines Bauteils 30 angeordnet, welches dicht in dem Deckel 3 verankert ist und in seiner Mitte einen Hohlraum 31 umschließt. In diesen Hohlraum 31 münden von unten her kleine Durchgangskanäle 32, sodass der Innenraum des Topfes 1 über diese Durchgangskanäle 32 mit dem Hohlraum 31 sowie über die Durchlassöffnung 29 mit der äußeren Umgebung verbunden ist.

In der Betriebsstellung des Kochtopfs, bei der Deckel 3 fest auf dem Topf 1 verankert ist, ist die Durchlassöffnung 29 mit einem lose auf dieser aufliegenden kugelförmigen Verschlusskörper 33 abgedeckt. Das Gewicht des Verschlusskörpers 33 bewirkt, dass sich im Innern des Topfes 1 ein gewisser Druck aufbauen kann.

Der Verschlusskörper 33 ist von einer Abdeckhaube 34 umgeben, wobei diese dem kugelförmigen Verschlusskörper 33 ausreichend Spiel lässt, um sich bei Bedarf von der Durchlassöffnung 29 abzuheben. Die Abdeckhaube 34 ist Teil einer der beiden beweglichen Klauen 6, sodass der Verschlusskörper 33 mittels der mit der jeweiligen Klaue 6 verbundenen Abdeckhaube 34 bewegt wird. In der verriegelten Stellung der Klauen 6 befindet sich die Abdeckhaube 34 unmittelbar über der Durchlassöffnung 29, sodass der Verschlusskörper 33 diese abdeckt. Die Durchlassöffnung 29 ist kreisrund ausgebildet, sodass der kugelförmige Verschlusskörper 33 diese im verriegelten Zustand des Deckels 3 dicht verschließen kann.

Wenn der Deckel geöffnet werden soll, werden die Klauen 6 durch Betätigung des Hebels 9 radial nach außen verschoben. Aufgrund dieser Verschiebung der Klauen 6 wandert auch die Abdeckhaube 34 mit nach außen und nimmt dabei den kugelförmigen Verschlusskörper 33 mit, sodass bereits während des Entriegelungsvorgangs des Deckels 3 der innere Dampfdruck nach außen entweichen kann. Wenn der Deckel 3 anschließend von dem Topf 1 abgenommen wird, ist der Druckausgleich zwischen dem Innenraum des Topfes 1 und der Umgebung bereits hergestellt, und es besteht keine Gefahr mehr, dass die Bedienungsperson durch den plötzlich aus dem Topf aufsteigenden heißen Dampf verletzt wird. Das Austreten des Dampfes durch das Sicherheitsventil 28 geschieht an einer radial außen liegenden Stelle des Deckels 3, wo der Dampfaustritt für die Bedienungsperson ungefährlich ist.

### Bezugszeichenliste

- 1: Topf
- 2: Handgriffe
- 3: Deckel
- 4: Schüttrand
- 5: Dichtring
- 6: Klauen
- 7: Handgriff
- 8: Betätigungselement
- 9: Hebel
- 10: Welle
- 11: Ritzel
- 12: Zahnstangen
- 13: Schubstangen
- 14: Deckelrand
- 15: oberer Flansch des Dichtrings
- 16: unterer Flansch des Dichtrings
- 17: Scheibe
- 18: Dichtlippe
- 19: Verriegelungsschenkel
- 20: nach innen gebogener Bereich der Dichtlippe
- 21: Einschnürung
- 22: Vorsprung
- 23: Überdruckventil
- 24: Hülse
- 25: Gewicht
- 26: Führung
- 27: Öffnungen
- 28: Sicherheitsventil
- 29: Durchlassöffnung
- 30: Bauteil
- 31: Hohlraum
- 32: Durchgangskanäle
- 33: Verschlusskörper
- 34: Abdeckhaube

## Patentansprüche

1. Niederdruckkochtopf, bestehend aus einem mit einem bestimmten Fassungsvermögen versehenen runden oder ovalen Topf (1), der um seine obere Öffnung herum einen nach außen gebogenen Schüttrand (4) aufweist, einem auf die obere Öffnung passenden Deckel (3) mit einem Dichtring (5) aus elastischem Material, einem an dem Deckel (3) vorgesehenen Verschlussmechanismus, der mit beweglichen Klauen (6) zum Hintergreifen des Schüttrandes (4) ausgestattet ist, einem an dem Deckel (3) vorgesehen Handgriff (7), einem an dem Handgriff (7) angeordneten Betätigungselemeht (8) zum Lösen und Verriegeln der Klauen (6) und einem in dem Deckel (3) vorgesehenen Überdruckventil (23) sowie einem Sicherheitsventil (28), **dadurch gekennzeichnet, dass** das Sicherheitsventil (28) im Bereich von mindestens einer der Klauen (6) angeordnet ist und dass beim Bewegen der Klauen (6) in die Entriegelungsstellung das Sicherheitsventil (28) geöffnet wird, sodass bereits während des Entriegelungsvorgangs der innere Dampfdruck nach außen entweichen kann.

2. Niederdruckkochtopf nach Anspruch 1, **dadurch ge**- **kennzeichnet**, dass das Sicherheitsventil (28) eine Durchlassöffnung (29) durch den Deckel (3) aufweist, dass die Durchlassöffnung (29) in der Betriebsstellung mit einem lose auf dieser aufliegenden Verschlusskörper (33) abgedeckt ist, dass der Verschlusskörper (33) von einer Abdeckhaube (34) mit Spiel umgeben ist und dass die Abdeckhaube (34) Teil einer der beweglichen Klauen (6) ist, sodass der Verschlusskörper (33) in der nach außen verschobenen, entriegelten Klauenstellung die Durchlassöffnung (29) durch den Deckel (3) freigibt.

3. Niederdruckkochtopf nach Anspruch 2, **Dadurch gekennzeichnet, dass** die Durchlassöffnung (29) in der Oberseite eines Bauteils (30) angeordnet ist, welches dicht in dem Deckel (3) verankert ist.

4. Niederdruckkochtopf nach Anspruch 3, **dadurch ge-kennzeichnet**, dass das Bauteil (30) in seiner Mitte einen Hohlraum (31) umschließt, in welchen von unten her kleine Durchgangskanäle (32) münden, sodass der Innenraum des Topfes (1) über diese Durchgangskanäle (32) mit dem Hohlraum (31) sowie über die Durchlassöffnung (29) mit der äußeren Umgebung verbindbar ist.

5. Niederdruckkochtopf nach einem der Ansprüche 2 bis 4, **dadurch gekennzeichnet, dass** die Durchlassöffnung (29) des Sicherheitsventils (28) kreisrund ist und dass der Verschlusskörper (33) als Kugel ausgebildet ist.

## Claims

1. Low-pressure cooking pot, composed of a round or oval pot (1) which is provided with a defined capacity and which has an outwardly curved pouring edge (4) around its upper edge, a lid (3) which is suitable for the upper opening and which comprises a sealing ring (5) made of elastic material, a closure mechanism which is provided on the lid (3) and which is equipped with movable claws (6) in order to engage behind the pouring edge (4), a handle (7) which is provided on the lid (3), an actuating element (8) which is provided on the handle (7) for releasing and locking the claws (6) and a pressure-relief valve (23) which is provided in the lid (3), as well as a safety valve (28), ***characterized in* that** the safety valve (28) is arranged in the region of at least one of the claws (6) and that on moving the claws (6) into the releasing position, said safety valve (28) is opened so that the internal vapor pressure can escape to the outside already during the releasing operation.

2. Low-pressure cooking pot according to claim 1, ***characterized in* that** the safety valve (28) includes a passage opening (29) through the lid (3), that the passage opening (29) in the operating position is covered with a closure body (33) which loosely bears on the passage opening, that the closure body (33) is surrounded by a cover hood (34) with play, and that the cover hood (34) is a part of the movable claws (6) so that the closure body (33) unblocks the passage opening (29) through the lid (3) in the outwardly displaced released claw position.

3. Low-pressure cooking pot according to claim 2, **characterized in that** the passage opening (29) is arranged in the upper surface of a component (30) which is fixed in a sealing manner in the lid (3).

4. Low-pressure cooking pot according to claim 3, **characterized in that** the component (30) surrounds in the center thereof a hollow space (31) into which small passage channels (32) lead from below so that the interior of the pot (1) can be connected to the hollow space (31) via these passage channels (32) and to the external surroundings via the passage opening (29).

5. Low-pressure cooking pot according to one of the claims 2 to 4, **characterized in that** the passage opening (29) of the safety valve (28) is circular and that the closure body (33) is formed as a ball.

## Revendications

1. Marmite à basse pression, se composant d'une marmite (1) ronde ou ovale d'une contenance définie qui présente autour de son ouverture supérieure une bordure de vidange (4) pliée vers l'extérieur, d'un couvercle (3) approprié à l'ouverture supérieure et comprenant une bague d'étanchéité (5) en matériau élastique, d'un mécanisme de fermeture qui est prévu au couvercle (3) et est muni des pattes mobiles (6) pour engager derrière la bordure de vidange (4), une poignée (7) prévue au couvercle (3), un élément de manoeuvre (8) disposé à la poignée (7), pour déverrouiller et verrouiller les pattes (6), et une soupape de surpression (23) prévue dans le couvercle (3) ainsi qu'une soupape de sécurité (28), ***caractérisée en* ce que** la soupape de sécurité est disposé dans la zone de l'une au moins des pattes (6) et que lors du mouvement des pattes (6) vers la position de déverrouillage, la soupape de sécurité est ouverte de sorte que la pression de vapeur intérieure peut échapper vers l'extérieur déjà pendant l'action de déverrouillage.

2. Marmite à basse pression selon la revendication 1, ***caractérisée en* ce que** la soupape de sécurité (28) présente une ouverture de passage (29) à travers du couvercle (3), que dans sa position de fonctionnement, l'ouverture de passage (29) est couverte d'un corps de fermeture (33) qui repose de manière volante sur l'ouverture de passage, que le corps de fermeture (33) est entouré d'un capot couvrant (34) avec jeu, et que le capot couvrant (34) s'inscrit dans l'une des pattes mobiles (6) de sorte que le corps de fermeture (33) libère l'ouverture de passage (29) à travers du couvercle (3) dans la position des pattes déplacée vers l'extérieur et déverrouillée.

3. Marmite à basse pression selon la revendication 2, ***caractérisée en* ce que** l'ouverture de passage (29) est disposée dans la surface supérieure d'un composant (30) qui est ancré de manière étanche dans le couvercle (3).

4. Marmite à basse pression selon la revendication 3, **caractérisée en ce que** le composant (30) entoure au son milieu un creux (31) dans lequel débouchent des petits canaux de passage (32) par le bas de sorte que l'intérieur de la marmite (1) peut être connecté au creux (31) au travers de ces canaux de passage (32) et aux environs extérieurs au travers de l'ouverture de passage (29).

5. Marmite à basse pression selon l'une des revendications 2 à 4, **caractérisé en ce que** l'ouverture de passage (29) de la soupape de sécurité (28) et circulaire et que le corps de fermeture (33) est en forme de bille.
